# FASCICULE DE BREVET EUROPEEN

(11) **EP 2 172 908 B1**
(45) Date de publication et mention de la délivrance du brevet: **25.07.2012**
(21) Numéro de dépôt: 09170948.5
(22) Date de dépôt: 22.09.2009
(51) Int. Cl.: G07B 17/00, H04N 1/00

(54) **Dispositif de numérisation pour système d'affranchissement**
Vorrichtung zur Digitalisierung für Frankiersystem
Digitizing device for franking system

(30) Priorité: 29.09.2008 FR 0856533
(43) Date de publication de la demande: 07.04.2010
(73) Titulaire: NEOPOST TECHNOLOGIES, 92220 Bagneux (FR)
(72) Inventeur: Audeon, David, 91300, MASSY (FR); Coret, Francis, 93460, GOURNAY SUR MARNE (FR)
(74) Mandataire: David, Alain

(56) Documents cités:
- EP-A- 1 601 180
- WO-A-2008/078126
- DE-U1-202005 000 417
- US-A- 4 886 596

## Description

### Domaine de la technique

La présente invention se rapporte exclusivement au domaine du traitement de courrier et elle concerne plus particulièrement un dispositif de numérisation pouvant être intégré dans un module indépendant ou dans l'un quelconque des divers modules constituant un système d'affranchissement, comme le module d'alimentation en articles de courrier (dit aussi alimenteur), le module de pesée des articles de courrier (balance postale), le module d'impression de ces articles de courrier (machine à affranchir proprement dit) ou encore le module de pliage et d'insertion (plieuse/inséreuse).

### Art antérieur

Il est bien connu que les administrations postales ou les transporteurs privés utilisent des systèmes de numérisation complexes permettant de nombreuses applications de contrôle et de suivi, en particulier l'analyse des articles de courrier et leur tri suivant leur destination. Ces systèmes sont toutefois particulièrement coûteux et leur volume est important du fait notamment de l'utilisation de caméras. Ils ne sont donc réellement intéressants pour un expéditeur que si celui-ci est amené à traiter de gros volumes de courrier, comme un routeur. En effet, dans le cadre d'un système d'affranchissement standard disposé dans le local d'expédition du courrier d'une entreprise et formé par exemple d'un alimenteur et d'une machine à affranchir et éventuellement d'une balance postale et d'une plieuse/inséreuse, la numérisation des articles de courrier à l'aide de telles technologies n'est pas envisageable.

Pour ces systèmes d'affranchissement conventionnels, il devient nécessaire de recourir à des capteurs de petite dimension, de type CIS (Contact Image Sensor), utilisés aujourd'hui surtout dans les unités de numérisation des photocopieurs. Or, dans ces photocopieurs, ce capteur CIS disposé derrière la vitre de l'appareil, s'il peut se déplacer d'une extrémité à l'autre de cette vitre, est généralement positionné à une distance (hauteur) déterminée et fixe de celle-ci et donc du document à photocopier quelle que soit son épaisseur.

Il en va tout autrement avec un système d'affranchissement. En effet, la face supérieure des articles de courrier n'est pas toujours plane, des différences d'épaisseur dues au contenu de l'article de courrier ou des défauts de forme dus au convoyage au travers du système peuvent altérer la qualité de la numérisation. De plus, la largeur de la zone numérisée est relativement grande, typiquement supérieure à 30 cm. En effet, en fonction du format de l'article de courrier, la position de l'adresse du destinataire est différente et il est souhaitable de pouvoir numériser non seulement cette adresse destinataire mais aussi les autres informations visibles sur l'article de courrier (montant d'affranchissement, adresse de l'expéditeur, etc).

Une première solution à ces problèmes est donnée par le dispositif de numérisation spécialement adapté aux systèmes d'affranchissement et illustré dans la demande de brevet FR 2920567 déposée au nom de la demanderesse. Dans ce dispositif à hauteur variable et non plus fixe, le convoyage des articles de courrier se fait en gardant une référence commune qui est la face inférieure de ces articles de courrier. Ainsi, quelle que soit l'épaisseur de l'article de courrier, sa face inférieure passera donc dans le système toujours au même endroit.

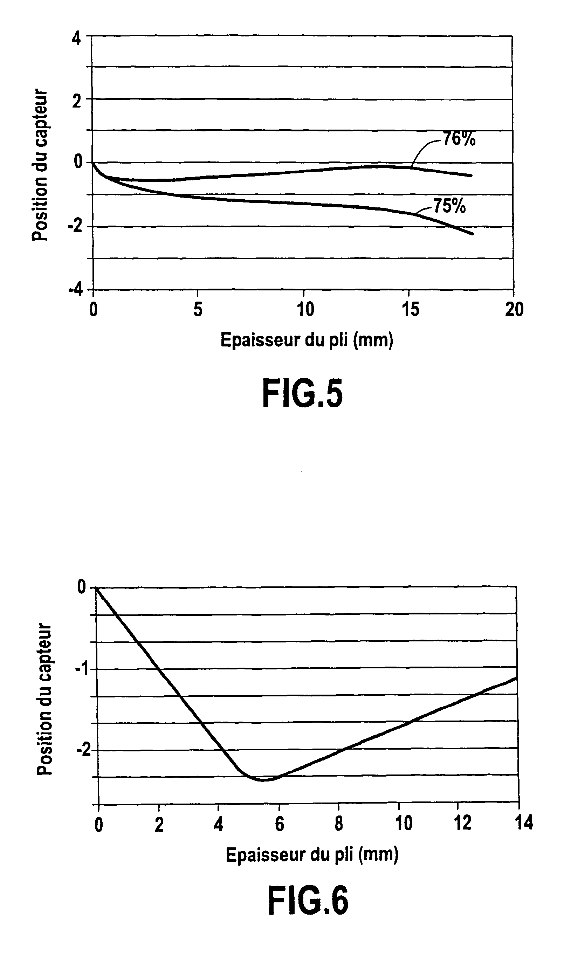

Ce dispositif donne globalement satisfaction notamment pour des cadences d'affranchissement faibles ou moyennes. Par contre, pour des cadences élevées, il souffre de certains inconvénients provenant principalement de l'amplitude du déplacement du capteur qui peut alors être de quelques dizaines de mm. En effet, ce capteur doit se déplacer verticalement d'une valeur égale à l'épaisseur de l'article de courrier (qui peut varier de 0,2 mm à plus de 20 mm) et la position du capteur par rapport à la face supérieure du pli varie alors de façon notable en fonction de cette épaisseur, comme le montre la figure 6, ce qui va entraîner des chocs fréquents avec le front de l'article de courrier. Ainsi, pour un article de courrier d'environ 5 mm d'épaisseur, le capteur se situant plus de 2 mm en dessous de la face supérieure de l'article de courrier, c'est à dire beaucoup trop bas par rapport à cet article, il va se produire un choc important avec le capteur lors de l'arrivée de l'article de courrier.

En outre, afin de soulever le capteur d'une valeur sensiblement égale à l'épaisseur de l'article de courrier, il est nécessaire pour garantir une position verticale précise du capteur que les bras de suspension comportent une forme géométrique inférieure spécifique avec un plan incliné et un arrondi qui nécessitent un usinage avec des tolérances de fabrications très étroites et donc un prix de revient élevé.

Une solution semblable existe dans la demande DE 20 2005 000417 A1 concernant l'adaptation de la position relative entre un article de courrier et une tête d'impression.

### Objet et définition de l'invention

La présente invention a donc pour objet de pallier les inconvénients précités en installant un capteur dit CIS dans un système d'affranchissement qui permette une numérisation correcte de toute la surface des articles de courrier, quels que soient le format (du format carte de visite jusqu'au format le plus grand) et l'épaisseur de cet article de courrier. Un but de l'invention est de permettre à ce capteur de s'adapter aux déplacements et aux défauts de surface de l'article de courrier, tout en permettant une numérisation de qualité suffisante pour pouvoir utiliser un logiciel de reconnaissance de caractères analysant les images numérisées. Encore un but de l'invention est de maîtriser parfaitement la distance entre le capteur et l'article de courrier gage d'une bonne qualité de numérisation.

Ces buts sont atteints par un dispositif de numérisation d'articles de courrier comprenant, disposés en aval d'un ensemble de rouleaux de transport destiné à convoyer lesdits articles de courrier au travers d'un module d'un système d'affranchissement:
un capteur d'images à contact (CIS) disposé selon une direction perpendiculaire à la direction de convoyage des articles de courrier dans ledit module,
   - un support sur lequel est fixé ledit capteur, ledit support pouvant pivoter à une extrémité d'au moins un premier levier d'entraînement dont l'autre extrémité peut elle même pivoter autour d'un premier axe d'articulation commun, solidaire d'une partie fixe dudit module et disposé en amont dudit ensemble de rouleaux de transport, de façon à permettre un déplacement vertical dudit capteur d'images à contact,
caractérisé en ce qu'il comporte en outre au moins un second levier d'entraînement dont une extrémité peut pivoter autour d'un second d'axe d'articulation commun, solidaire de ladite partie fixe dudit module et disposé en aval dudit ensemble de rouleaux de transport et dont l'autre extrémité déplacée en synchronisme avec le déplacement vertical dudit ensemble de rouleaux de transport va assurer le déplacement dudit capteur d'images à contact via ledit premier levier d'entraînement.

Selon un mode de réalisation préférentiel, ledit second levier d'entraînement comporte, à une distance déterminée dudit second axe d'articulation commun, un barreau de levage destiné à coopérer avec une zone d'appui dudit premier levier d'entraînement pour, en soulevant ledit premier levier d'entraînement sous l'action dudit déplacement vertical dudit ensemble de rouleaux de transport, assurer un positionnement dudit capteur d'images à contact par rapport à une face supérieure dudit article de courrier sensiblement identique quelle que soit l'épaisseur dudit article de courrier.

Ainsi, par cette structure simple à double levier, il est possible de maintenir la position du capteur par rapport à la face supérieure de l'article de courrier quasi-constante pour toutes les épaisseurs d'articles de courrier et en limitant les chocs avec les articles de courrier d'améliorer la qualité de la numérisation. En outre, le dispositif n'est plus soumis à des tolérances de fabrication étroites augmentant son prix de revient.

De préférence, ladite distance déterminée est comprise entre 75 et 76% de la longueur totale dudit second levier d'entraînement.

Avantageusement, en absence d'article de courrier, il peut être prévu un jeu entre ladite zone d'appui et ledit barreau de levage pour décaler la montée dudit capteur d'images à contact par rapport au déplacement vertical dudit ensemble de rouleaux de transport.

De préférence, ledit second axe d'articulation commun est disposé à une hauteur supérieure à l'épaisseur maximale de chacun desdits articles de courrier pouvant être convoyés dans ledit module.

Avantageusement, chacun desdits premier et second leviers d'entraînement présente une forme en pont à la courbure accentuée de sorte que l'ensemble de ces deux leviers forme sensiblement une figure en W inversé.

Ledit capteur d'images à contact est formé d'un module intégré comportant des cellules de détection adjacentes à semi-conducteur, une optique de collimation et un système d'éclairage.

Selon l'espace disponible, le dispositif de numérisation peut être monté dans un module indépendant du système d'affranchissement ou dans l'un des modules suivants du système d'affranchissement : alimenteur, balance postale, machine à affranchir, plieuse/inséreuse.

L'invention concerne également tout module d'un système d'affranchissement comportant un tel dispositif de numérisation.

### Brève description des dessins

L'invention sera mieux comprise au vu de la description détaillée qui va suivre accompagnée par des exemples illustratifs et non limitatifs en regard des figures suivantes sur lesquelles :
- les figures 1 et 2 sont des vues générales de systèmes d'affranchissements mettant en oeuvre l'invention,
- les figures 3 et 4 sont des vues respectivement en coupe et en perspective d'un exemple de réalisation de l'invention,
- la figure 5 montre des courbes illustrant pour différentes épaisseurs d'articles de courrier et pour différentes positions de la zone d'appui entre leviers, la variation de la position du capteur d'images par rapport à la face supérieure de l'article de courrier dans le dispositif de numérisation selon l'invention, et
- la figure 6 montre une courbe illustrant, pour différentes épaisseurs d'articles de courrier, la variation de la position du capteur d'images par rapport à la face supérieure de l'article de courrier dans un dispositif de numérisation de l'art antérieur.

### Description détaillée de modes de réalisation

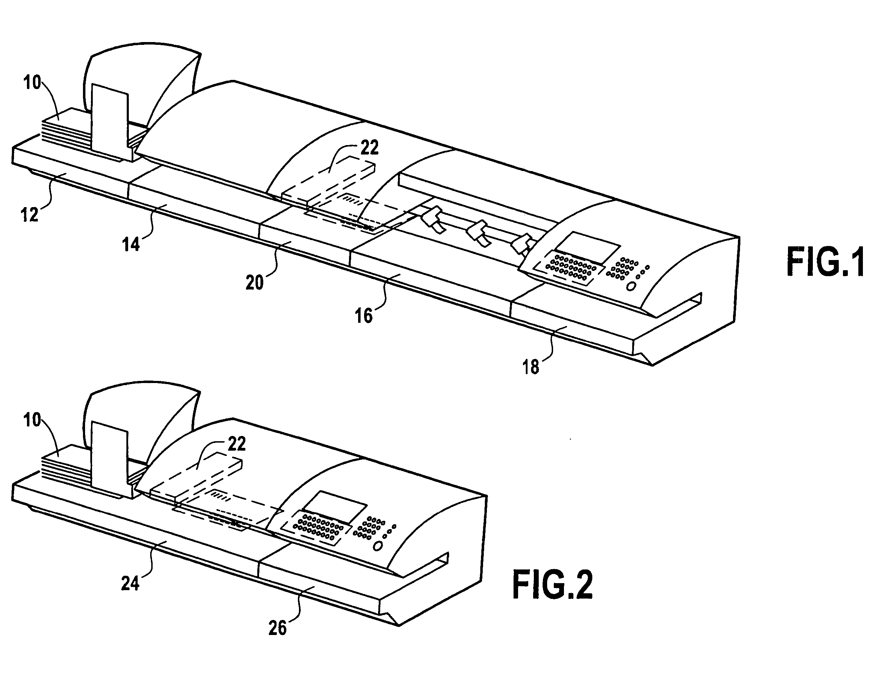

La figure 1 illustre un premier exemple de réalisation d'un système d'affranchissement d'articles de courrier comportant, comme il est connu et disposés d'amont en aval selon la direction d'avancée des articles de courrier 10 : un module 12 d'alimentation en articles de courrier destiné à recevoir une pile d'articles de courrier typiquement en vrac (c'est à dire de dimensions et poids différents) ; un module 14 de sélection et transport un à un de ces articles de courrier ; de préférence un module 16 de pesée dynamique pour déterminer le poids et éventuellement les dimensions de chaque article de courrier sélectionné et un module d'impression 18 destiné à imprimer une empreinte postale sur chacun des articles de courrier ainsi sélectionnés un à un et pesés. Le module d'impression est de préférence, comme il est aussi connu, relié à un serveur (non représenté) d'un concessionnaire de ce système d'affranchissement lui-même relié à un serveur d'une administration postale ou d'un transporteur privé assurant la distribution du courrier (non représenté).

Dans ce premier exemple de réalisation illustré, le système d'affranchissement comporte en outre un module indépendant 20 disposé en amont du module de pesée dynamique (mais une disposition autre est aussi envisageable), pour faire l'acquisition d'une image numérique de l'article de courrier 10 et en extraire différentes données nécessaires à son traitement et son suivi comme l'adresse du destinataire ou un identifiant unique porté sur l'article de courrier. Pour ce faire, ce module comporte un dispositif de numérisation muni d'un capteur d'images 22 associé à des logiciels de reconnaissance de codes à barres et de reconnaissance OCR. Le module d'impression comporte en outre une interface utilisateur perfectionnée avec un clavier permettant l'affichage sur un écran de tout ou partie de l'image de l'article de courrier ainsi numérisée et, si nécessaire, la correction des données postales extraites de cette image. Le clavier peut être un clavier physique interagissant avec un clavier virtuel de l'écran qui est alors avantageusement de type tactile ou être remplacé purement et simplement par cet écran tactile. Le module d'impression peut aussi comporter des moyens de stockage (non représentés) de type base de données pour stocker l'image de l'enveloppe ainsi numérisée.

Le capteur est avantageusement un capteur d'images à contact (CIS : contact image sensor) de type linéaire dont la longueur est prévue pour numériser au moins une largeur d'un article de courrier couvrant l'empreinte postale et l'adresse destinataire quel que soit le format de cet article de courrier. Ce capteur d'images linéaire est typiquement un module intégré comportant des cellules de détection adjacentes à semi-conducteur CCD ou CMOS, une optique de collimation et un système d'éclairage qui lorsqu'il est activé éclaire la surface sur laquelle le capteur est positionné et délivre en retour au niveau de chacune des cellules de détection un signal proportionnel à la lumière réfléchie par la surface de l'article de courrier.

Un autre exemple de réalisation d'un système d'affranchissement est illustré à la figure 2. Il comporte comme il est connu et disposés d'amont en aval selon la direction d'avancée des articles de courrier 10 : un module 24 d'alimentation, de sélection et de transport destiné à recevoir une pile d'articles de courrier typiquement en vrac (c'est à dire de dimensions et poids différents), à sélectionner et à transporter un à un ces articles de courrier vers un module d'impression 26 destiné à imprimer une empreinte postale sur chacun des articles de courrier ainsi sélectionnés un à un. Comme précédemment, ce module d'impression peut être relié à un serveur (non représenté) d'un concessionnaire du système d'affranchissement. Dans ce second exemple de réalisation, le capteur d'images 22 du dispositif de numérisation destiné à faire l'acquisition de l'image numérique de l'article de courrier 10 et en extraire les différentes données nécessaires à son traitement et son suivi n'est toutefois plus disposé dans un module indépendant mais directement dans le module d'alimentation 24. Il est bien entendu, comme précédemment, associé à des logiciels de reconnaissance de codes à barres et de reconnaissance OCR et le module d'impression 26 comporte une interface utilisateur appropriée pour, si nécessaire, corriger des erreurs dues à la reconnaissance de caractères.

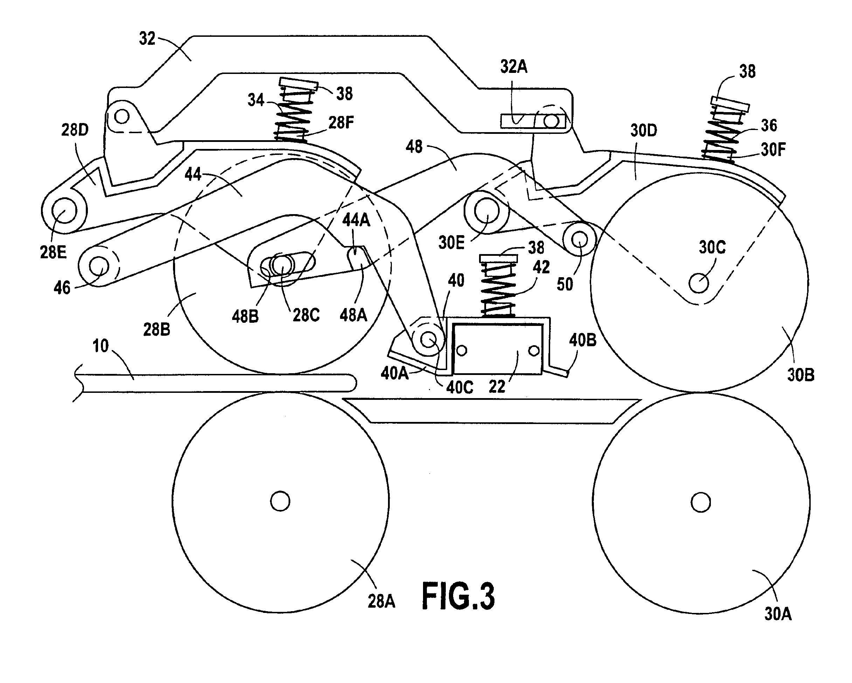

La figure 3 montre plus en détail le montage du capteur d'images linéaire à contact 22 entre les rouleaux de transport du module indépendant 20 de la figure 1 ou du module d'alimentation 24 de la figure 2. L'un comme l'autre de ces modules comporte en effet plusieurs rouleaux de transport formés d'au moins un ensemble de rouleaux superposés de transport pour convoyer les articles de courrier au travers du module considéré et plus particulièrement, par exemple, de deux ensembles adjacents de rouleaux superposés de transport avant 28A, 28B et arrière 30A, 30B. Comme il est connu, les rouleaux supérieurs 28B, 30B de ces ensembles sont montés fous sur des axes de rotation transverses 28C, 30C au chemin de transport des articles de courrier et solidaires de chapes ou étriers 28D, 30D supports de ces rouleaux et reliées entre elles par un tirant 32 dont une des extrémités comporte une lumière 32A. Pour s'adapter aux différentes épaisseurs des articles de courrier, ces chapes peuvent chacune pivoter indépendamment verticalement autour d'un axe fixe d'articulation 28E, 30E à l'encontre de moyens élastiques 34, 36 dont une extrémité est en prise avec un plot supérieur 28F, 30F des chapes supports des rouleaux et l'autre extrémité solidaire d'une partie fixe 38 du module. Les rouleaux inférieurs 28A, 30A (qui pourraient avantageusement être remplacés par une courroie) sont quant à eux motorisés et actionnés en synchronisme par différents moyens connus de commande et de contrôle nécessaires à leur fonctionnement et qu'il est donc inutile de décrire plus en détail.

En aval de l'ensemble de rouleaux superposés de transport 28A, 28B est donc disposé le capteur linéaire à contact 22 monté dans un support mobile 40 qui peut librement à la fois se déplacer verticalement à l'encontre d'un moyen élastique 42 et pivoter autour d'un axe longitudinal 40C, la mobilité ainsi obtenue permettant au capteur de suivre la surface supérieure de l'article de courrier qui n'est pas uniforme et donc d'assurer par son déplacement et sa position privilégiée dans le module une qualité de numérisation optimale quelle que soit l'épaisseur des articles de courrier, notamment en présence d'enveloppes épaisses. Cette numérisation et la reconnaissance automatique des diverses informations portées sur l'article de courrier sont assurées par un moyen de traitement (non représenté) formé simplement par un circuit programmable, comme il est décrit dans la demande de brevet citée en préambule, synchronisé à partir des impulsions d'un codeur rotatif ou simplement par la détection de changement d'intensité lumineuse apparaissant systématiquement lors du passage d'un article de courrier à un autre. Des moyens logiciels appropriés de reconnaissance OCR ou de codes à barres présents dans des moyens mémoires associés au moyen de traitement permettront alors la reconnaissance des données d'adresse ou de code imprimées sur les articles de courrier et si nécessaire la création d'une base de données d'adresses et de suivi de ces articles de courrier.

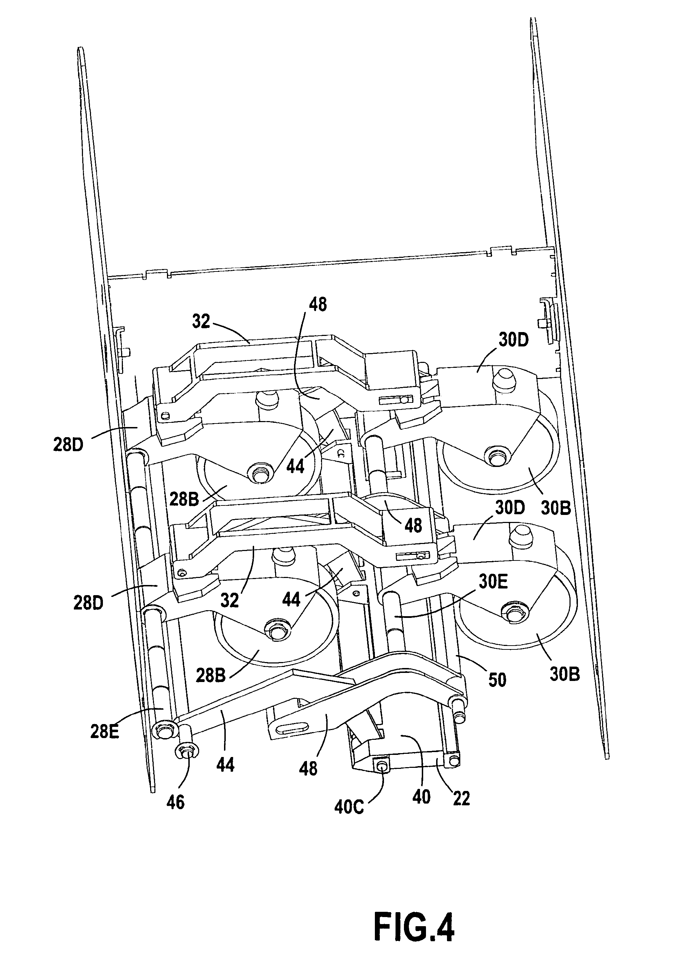

Selon l'invention, et comme l'illustre la perspective de la figure 4, le capteur d'images linéaire à contact 22 et son support 40 dont les parois sont prolongées par un déflecteur amont 40A et un déflecteur aval 40B pour faciliter la montée et la descente du capteur sur l'article de courrier, sont articulés à une extrémité d'un ou plusieurs premiers leviers d'entraînement 44 dont l'autre extrémité est elle même articulée sur un premier axe d'articulation commun 46 solidaire de la partie fixe 38 du module et disposé en amont de l'axe de rotation 28C des rouleaux de transport avant à une hauteur au moins égale à l'épaisseur maximale d'un article de courrier pouvant être convoyé mais inférieure à celle de l'axe fixe d'articulation 28E de la chape support des rouleaux de transport avant, c'est-à-dire en pratique sensiblement sur le même plan que l'axe de rotation 28C dans sa position neutre de repos. Chaque premier levier d'entraînement présente une forme en pont à la courbure accentuée pour passer au dessus de l'axe de rotation 28C et sa face inférieure comporte une zone d'appui 44A destinée à reposer sur un barreau de levage 48A d'un second levier d'entraînement 48 dont une extrémité comportant une lumière 48B est destinée à être traversée par l'axe de rotation précité 28C des rouleaux de transport avant et dont l'autre extrémité est articulée sur un second axe d'articulation commun 50 solidaire de la partie fixe 38 du module et disposé en aval de l'axe de rotation 28C des rouleaux de transport avant et plus précisément en aval de l'axe fixe d'articulation 30E de la chape support des rouleaux de transport arrière mais en amont de l'axe de rotation 30C de ces rouleaux de transport arrière, à une hauteur supérieure à l'épaisseur maximale d'un article de courrier mais inférieure à celle de l'axe fixe d'articulation 30E, de préférence sensiblement sur le même plan que le premier axe d'articulation commun. Ce second levier présente également une forme en pont à la courbure accentuée pour passer au dessus de l'axe fixe d'articulation 30E de la chape support des rouleaux de transport arrière, de sorte que l'ensemble de ces deux leviers forme sensiblement une figure en W inversé.

La mise en oeuvre de la numérisation est effectuée comme suit.

Lorsque l'article de courrier pénètre dans le module, il va tout d'abord soulever les rouleaux supérieurs de transport avant, ce qui va automatiquement entraîner la levée du second levier d'entraînement dont la seconde extrémité est reliée à l'axe de rotation de ces rouleaux. Cette levée du second levier va alors entraîner directement ou avec un léger retard, selon que le barreau de levage est ou non en contact avec la zone d'appui correspondante, celle du premier levier d'entraînement qui va entraîner à son tour le soulèvement du support du capteur d'images à contact. Ainsi, le capteur est soulevé avant que l'article de courrier n'arrive à son contact et le choc avec le front de l'article de courrier est donc particulièrement atténué. De même, par l'effet des tirants, les rouleaux supérieurs de transport arrière sont aussi soulevés avant que l'article de courrier ne les atteint.

L'article de courrier transporté par les rouleaux inférieurs de transport motorisés va ensuite progresser dans le module sous le capteur d'images qui va procéder à la numérisation pendant cette avancée jusqu'à ce que la partie arrière de l'article de courrier vienne à quitter la prise des rouleaux de transport avant entraînant une retombée des rouleaux supérieurs avant vers leur position de repos initiale et corrélativement un abaissement du second levier d'entraînement. Toutefois, le capteur d'images étant à cet instant encore en contact avec l'article de courrier, le premier levier d'entraînement ne bouge pas entraînant une désolidarisation du barreau de levage et de la zone d'appui et ce n'est qu'une fois la numérisation achevée et que la partie arrière de l'article de courrier aura dépassé le capteur d'images que celui-ci va retomber et regagner sa position initiale en entraînant avec lui dans sa descente le premier levier d'entraînement jusqu'à retrouver lui aussi sa position initiale de repos dans laquelle sa zone d'appui se retrouve en contact avec le barreau de levage du second levier.

Toutefois, comme il a été évoqué précédemment, il peut être préférable de laisser un jeu entre cette zone d'appui et le barreau de levage, typiquement entre 0,2 et 2mm, pour décaler la montée du capteur d'images par rapport à la montée des rouleaux supérieurs de transport avant. En effet, lors de l'arrivée de l'article de courrier sur le rouleau, la vitesse verticale du rouleau et donc celle du levier est alors très importante, ce qui pour des vitesses de transport élevées de l'ordre de 1 à 2 m/s pourrait endommager le capteur d'images.

On notera que s'il peut être relativement aisé de déplacer le capteur d'images avec seulement un seul ensemble de premier et second leviers d'entraînement, il est bien entendu qu'il peut aussi être envisagé de le faire avec deux ou plusieurs ensembles selon que le module comporte une ou plusieurs séries de rouleaux d'entraînement par ensemble superposés de rouleaux de transport. Ainsi, avec des ensembles superposés de rouleaux de transports comportant chacun deux séries de rouleaux de transport, il peut être envisagé un unique ensemble de premier et second leviers d'entraînement disposé entre ces deux séries de rouleaux, deux ensembles de premier et second leviers d'entraînement disposés de part et d'autre de ces deux séries ou encore trois ensembles de premier et second leviers d'entraînement disposés d'une part entre les deux et d'autre part de part et d'autre de ces deux séries. On notera également qu'il est aussi possible d'envisager une disposition dissymétrique avec deux ensembles de premier et second leviers d'entraînement encadrant une des deux séries de rouleau de transport.

## Revendications

1. Dispositif de numérisation d'articles de courrier comprenant, disposés en aval d'un ensemble de rouleaux de transport (28A, 28B) destiné à convoyer lesdits articles de courrier au travers d'un module d'un système d'affranchissement:
. un capteur d'images à contact (CIS 22) disposé selon une direction perpendiculaire à la direction de convoyage des articles de courrier dans ledit module,
. un support (40 ; 40A, 40B) sur lequel est fixé ledit capteur, ledit support pouvant pivoter à une extrémité d'au moins un premier levier d'entraînement (44) dont l'autre extrémité peut elle même pivoter autour d'un premier axe d'articulation commun (46), solidaire d'une partie fixe (38) dudit module et disposé en amont dudit ensemble de rouleaux de transport, de façon à permettre un déplacement vertical dudit capteur d'images à contact,
**caractérisé en ce qu'**il comporte en outre au moins un second levier d'entraînement (48) dont une extrémité peut pivoter autour d'un second axe d'articulation commun (50), solidaire de ladite partie fixe dudit module et disposé en aval dudit ensemble de rouleaux de transport et dont l'autre extrémité déplacée en synchronisme avec le déplacement vertical dudit ensemble de rouleaux de transport va assurer le déplacement dudit capteur d'images à contact via ledit premier levier d'entraînement.

2. Dispositif de numérisation selon la revendication 1, **caractérisé en ce que** ledit second levier d'entraînement comporte, à une distance déterminée dudit second axe d'articulation commun, un barreau de levage (48A) destiné à coopérer avec une zone (44A) d'appui dudit premier levier d'entraînement pour, en soulevant ledit premier levier d'entraînement sous l'action dudit déplacement vertical dudit ensemble de rouleaux de transport, assurer un positionnement dudit capteur d'images à contact par rapport à une face supérieure dudit article de courrier sensiblement identique quelle que soit l'épaisseur dudit article de courrier.

3. Dispositif de numérisation selon la revendication 2, **caractérisé en ce que** ladite distance déterminée est comprise entre 75 et 76 % de la longueur totale dudit second levier d'entraînement.

4. Dispositif de numérisation selon la revendication 2, **caractérisé en ce que**, en absence d'article de courrier, il est prévu un jeu entre ladite zone d'appui et ledit barreau de levage pour décaler la montée dudit capteur d'images à contact par rapport au déplacement vertical dudit ensemble de rouleaux de transport.

5. Dispositif de numérisation selon l'une quelconque des revendications 1 à 4, **caractérisé en ce que** ledit second axe d'articulation commun est disposé à une hauteur supérieure à l'épaisseur maximale de chacun desdits articles de courrier pouvant être convoyés dans ledit module.

6. Dispositif de numérisation selon l'une quelconque des revendications 1 à 5, **caractérisé en ce que** chacun desdits premier et second leviers d'entraînement présente une forme en pont à la courbure accentuée de sorte que l'ensemble de ces deux leviers forme sensiblement une figure en W inversé.

7. Dispositif de numérisation selon l'une quelconque des revendications 1 à 6, **caractérisé en ce que** ledit capteur d'images à contact est formé d'un module intégré comportant des cellules de détection adjacentes à semi-conducteur, une optique de collimation et un système d'éclairage.

8. Dispositif de numérisation selon l'une quelconque des revendications 1 à 7, **caractérisé en ce qu'**il est monté dans un module indépendant du système d'affranchissement.

9. Dispositif de numérisation selon l'une quelconque des revendications 1 à 7, **caractérisé en ce qu'**il est monté dans l'un des modules suivants du système d'affranchissement : alimenteur, balance postale, machine à affranchir, plieuse/inséreuse.

## Claims

1. A scanner device for scanning mailpieces comprising, disposed downstream from a set of conveyor rollers (28A, 28B) for conveying said mailpieces through a module of a franking system:
· a contact image sensor (22) or "CIS" disposed in a direction perpendicular to the conveying direction in which the mailpieces are conveyed through said module; and
· a support (40; 40A, 40B) to which said sensor is fastened, said support being mounted to pivot at one end of at least one first drive lever (44), the other end of which is itself mounted to pivot about a first common hinge pin (46) secured to a stationary portion (38) of said module and disposed upstream from said set of conveyor rollers, so as to make it possible for said contact image sensor to move vertically;
**characterized in that** said scanner device further comprises at least one second drive lever (48) one end of which is mounted to pivot about a second common hinge pin (50) secured to said stationary portion of said module and disposed downstream from said set of conveyor rollers, the other end of said second drive lever, by being moved synchronously with the vertical movement of said set of conveyor rollers, moving said contact image sensor via said first drive lever.

2. A scanner device according to claim 1, wherein, at a determined distance from said second common hinge pin, said second drive lever is provided with a raise bar (48A) designed to co-operate with a bearing zone (44A) of said first drive lever to raise said first drive lever under the action of said vertical movement of said set of transport rollers, thereby positioning said contact image sensor relative to a top face of said mailpiece substantially identically regardless of the thickness of said mailpiece.

3. A scanner device according to claim 2, wherein said determined distance lies in the range 75% of the total length of said second drive lever to 76% of the total length of said second drive lever.

4. A scanner device according to claim 2, wherein, in the absence of any mailpiece, clearance is provided between said bearing zone and said raise bar so as to offset the rise of said contact image sensor relative to the vertical movement of said set of conveyor rollers.

5. A scanner device according to any one of claims 1 to 4, wherein said second common hinge pin is disposed at a height greater than the maximum thickness of each of said mailpieces that can be conveyed through said module.

6. A scanner device according to any one of claims 1 to 5, wherein each of said first and second drive levers is in the shape of a bridge whose curvature is accentuated so that the two levers together substantially form an upside-down W figure.

7. A scanner device according to any one of claims 1 to 6, wherein said contact image sensor is formed of an integrated module comprising adjacent semiconductor detector cells, collimation optics, and a light system.

8. A scanner device according to any one of claims 1 to 7, that is mounted in an independent module of the franking system.

9. A scanner device according to any one of claims 1 to 7, that is mounted in one of the following modules of the franking system: feeder; postal scales; franking machine; and folder/stuffer.

## Patentansprüche

1. Vorrichtung zur Digitalisierung von Poststücken, die - einer Anordnung von Transportrollen (28A, 28B), welche dazu bestimmt ist, die Poststücke durch ein Modul eines Frankiersystems zu befördern, nachgeschaltet - umfaßt:
- einen Kontakt-Bildsensor (CIS 22), der in einer Richtung senkrecht zur Beförderungsrichtung der Poststücke in dem Modul angeordnet ist,
- einen Halter (40; 40A, 40B), an dem der Sensor befestigt ist, wobei der Halter an einem Ende wenigstens eines ersten Antriebshebels (44) verschwenken kann, dessen anderes Ende selbst um eine erste gemeinsame Gelenkachse (46), die mit einem festen Teil (38) des Moduls fest verbunden ist und der Transportrollenanordnung vorgeordnet ist, verschwenken kann, um eine Vertikalbewegung des Kontakt-Bildsensors zu ermöglichen,
**dadurch gekennzeichnet, daß** sie ferner wenigstens einen zweiten Antriebshebel (48) umfaßt, von dem ein Ende um eine zweite gemeinsame Gelenkachse (50), die mit dem festen Teil des Moduls fest verbunden und der Transportrollenanordnung nachgeordnet ist, verschwenken kann und dessen anderes Ende, das mit der Vertikalbewegung der Transportrollenanordnung synchron bewegt wird, das Bewegen des Kontakt-Bildsensors über den ersten Antriebshebel sicherstellen wird.

2. Digitalisierungsvorrichtung nach Anspruch 1, **dadurch gekennzeichnet, daß** der zweite Antriebshebel in einem bestimmten Abstand von der zweiten gemeinsamen Gelenkachse einen Hebestab (48A) umfaßt, der dazu bestimmt ist, mit einem Anlagebereich (44A) des ersten Antriebshebels zusammenzuwirken, um durch Anheben des ersten Antriebshebels unter der Wirkung der Vertikalbewegung der Transportrollenanordnung ein Positionieren des Kontakt-Bildsensors in bezug auf eine Oberseite des Poststücks sicherzustellen, das unabhängig von der Dicke des Poststücks im wesentlichen identisch ist.

3. Digitalisierungsvorrichtung nach Anspruch 2, **dadurch gekennzeichnet, daß** der bestimmte Abstand zwischen 75 und 76 % der Gesamtlänge des zweiten Antriebshebels beträgt.

4. Digitalisierungsvorrichtung nach Anspruch 2, **dadurch gekennzeichnet, daß**, wenn kein Poststück vorliegt, zwischen dem Anlagebereich und dem Hebestab ein Spiel vorgesehen ist, um die Aufwärtsbewegung des Kontakt-Bildsensors gegenüber der Vertikalbewegung der Transportrollenanordnung zu versetzen.

5. Digitalisierungsvorrichtung nach einem der Ansprüche 1 bis 4, **dadurch gekennzeichnet, daß** die zweite gemeinsame Gelenkachse in einer Höhe angeordnet ist, die größer ist als die maximale Dicke eines jeden der Poststücke, die in dem Modul befördert werden können.

6. Digitalisierungsvorrichtung nach einem der Ansprüche 1 bis 5, **dadurch gekennzeichnet, daß** ein jeder der ersten und zweiten Antriebshebel eine Brückenform mit verstärkter Krümmung aufweist, so daß diese beiden Hebel zusammen im wesentlichen eine Figur mit der Form eines umgekehrten W bilden.

7. Digitalisierungsvorrichtung nach einem der Ansprüche 1 bis 6, **dadurch gekennzeichnet, daß** der Kontakt-Bildsensor von einem integrierten Modul gebildet ist, das benachbarte Halbleiter-Detektionszellen, eine Kollimationsoptik und ein Beleuchtungssystem umfaßt.

8. Digitalisierungsvorrichtung nach einem der Ansprüche 1 bis 7, **dadurch gekennzeichnet, daß** sie in einem unabhängigen Modul des Frankiersystems angebracht ist.

9. Digitalisierungsvorrichtung nach einem der Ansprüche 1 bis 7, **dadurch gekennzeichnet, daß** sie in einem der folgenden Module des Frankiersystems angebracht ist: Zuführeinrichtung, Postwaage, Frankiermaschine, Falz/Kuvertiereinrichtung.
